# EUROPEAN PATENT SPECIFICATION

(11) **EP 2 684 938 B1**
(45) Date of publication and mention of the grant of the patent: **07.02.2018**
(21) Application number: 12758212.0
(22) Date of filing: 09.03.2012
(51) Int. Cl.: C10G 3/00, C10L 1/02

(54) **METHOD FOR ECONOMICALLY PREPARING HYDROGENATED BIODIESEL WITH IMPROVED LOW TEMPERATURE FLOWABILITY**
VERFAHREN ZUR WIRTSCHAFTLICHEN HERSTELLUNG VON HYDRIERTEM BIODIESEL MIT VERBESSERTER NIEDRIGTEMPERATUR-FLIESSFÄHIGKEIT
PROCÉDÉ DE PRÉPARATION ÉCONOMIQUE D'UN BIODIESEL HYDROGÉNÉ À FLUIDITÉ AMÉLIORÉE À BASSE TEMPÉRATURE

(30) Priority: 11.03.2011 KR 20110021689; 09.03.2012 KR 20120024181
(43) Date of publication of application: 15.01.2014
(73) Proprietor: SK Innovation Co., Ltd., Seoul 110-110 (KR); SK Energy Co., Ltd., Seoul 110-110 (KR)
(72) Inventor: CHU, Young Hwan, Daejeon 34124 (KR); KIM, Gyung Rok, Daejeon 305-761 (KR); RYU, Jae Wook, Daejeon 305-728 (KR); KIM, Do Woan, Daejeon 305-509 (KR); SONG, Jong Hee, Seongnam-si Gyeonggi-do 463-786 (KR); HWANG, Yoon Mang, Daejeon 305-712 (KR); CHOI, Sun, Daejeon 305-500 (KR)
(74) Representative: Comoglio, Elena
(86) International application number: PCT/KR2012/001749
(87) International publication number: WO 2012/124940

(56) References cited:
- WO-A1-2010/032752
- WO-A2-2010/011737
- US-A1- 2004 230 085
- US-A1- 2007 010 682
- US-A1- 2009 163 744
- US-A1- 2009 300 970

## Description

### Technical Field

The present invention relates to a method of manufacturing paraffin-based biodiesel having improved cold flow properties from a feed containing triglyceride, wherein multi-step hydrodeoxygenation is performed using a fresh feed in a diluted state after isomerizing part of the product of hydrodeoxygenation and then recycling the isomerized product.

### Background Art

Biodiesel which is currently traded on the market is mainly fatty acid methyl ester (FAME), and is manufactured by trans-esterification in which methanol is added to fat present in the form of triglyceride (TG) so that triglyceride is decomposed into fatty acids while esterification is carried out using methanol. However, because fatty acid methyl ester contains oxygen atoms and is an ester, it has a molecular structure different from that of diesel oil produced by a crude oil refining process, and thus limitations are imposed on completely substituting it for diesel oil in terms of properties. Specifically, oxygen contained in the molecule thereof may cause material corrosion and the ester compound may generate side reactions, undesirably plugging a nozzle in an engine.

In recent years, technologies for manufacturing hydrocarbons in the diesel oil range from triglyceride are being still developed all over the world, and partial commercialization thereof is ongoing in the Europe. The core of the technology for manufacturing hydrocarbon from triglyceride is removal of oxygen atoms from fat, and the most widely known technique is that oxygen is removed in the form of water or carbon dioxide or carbon monoxide by adding hydrogen, like a hydrodesulfurization process. This method is different from a typical hydrodesulfurization process as follows. Specifically, in the case of sulfur, it is converted to the form of H₂S gas and is thus separated from a liquid petroleum product using flashing, stripping, etc., but in a hydrotreated biodiesel technique, oxygen is mostly converted to the form of water and thus a 3-phase flashing process including layer separation is required to separate it from liquid hydrocarbon. Also, because triglyceride or feedstocks for biodiesel fuel (palm oil, rapeseed oil, soybean oil, etc.) composed mainly of triglyceride barely contains sulfur, an intentional supply of a sulfur compound should be done continuously, with the addition of the feed, in order to maintain the activity of a catalyst composed mainly of NiMo or CoMo. This characteristic is difference from the conventional desulfurization process.

Meanwhile, most fatty acids which constitute triglyceride as the main component of plant/animal oil include C10 ∼ C18 saturated or unsaturated carboxylic acids, and the unsaturated carboxylic acids each have one to three double bonds, all of which are in *cis* form. Thus, assuming that these acids are completely converted into hydrocarbons based on the range of the number of carbons, petroleum products in the diesel oil range can be obtained. For reference, in the case of palm oil widely used as a feedstock for biodiesel, the major fatty acids which constitute triglyceride are palmitic acid (C16 saturated fatty acid) and oleic acid (C18 unsaturated fatty acid with one double bond). The sum of these two fatty acids is as high as about 80% or more. Thus, if plant/animal oil contains certain amount of unsaturated fatty acids, double bonds of the unsaturated fatty acids are saturated together in hydrodeoxygenation. However, in the case of FAME, because the ester group connected to glycerol is separated by the addition of methanol and is thus merely converted into methyl ester, unstable olefins and oxygen atoms still remain in the fatty acids, thereby decreasing the oxidation stability of the manufactured FAME molecules. This is the structural problem of FAME.

Typically, in the case where a paraffin-based hydrocarbon is manufactured by adding hydrogen to triglyceride, decomposition of triglyceride into fatty acids is performed together, in addition to the saturation of double bonds and the deoxygenation as mentioned above. When the reaction is carried out at about 280 ∼ 330°C using a NiMo or CoMo catalyst, the above three types of reaction take place together with strong heat generation, and side reactions may also occur in this procedure. Typical side reactions may include polymerization caused by double bonds in fatty acids, formation of a metal complex between fatty acid and metal in plant/animal oil, esterification between fatty acid and alcohol produced during hydrogenation of fatty acid, etc.

Therefore, the conventional technologies have the above problems, and thus novel methods of increasing the life of equipment and a catalyst while suppressing strong reaction heat generated and side reactions during hydrodeoxygenation are required.

WO 2010/032752 discloses a method for manufacturing a diesel gas oil comprising hydrodeoxygenating a feedstock oil comprising triglycerides, separating the effluent into a gas phase component containing hydrogen, hydrogen sulfide and carbon dioxide and a liquid phase component containing a hydrocarbon oil, separating and removing water from the liquid phase component, fractionating the liquid phase component into a gas phase component, a light distillate, a middle distillate and a heavy distillate, isomerizing the middle distillate in the isomerization reactor and recycling to the feedstock oil a part of the product obtained by isomerizing the middle distillate fraction.

### Disclosure Technical Problem

Accordingly, an object of the present invention is to provide a method of manufacturing a paraffin-based hydrocarbon in the diesel oil range having improved cold flow properties by adding hydrogen to a feed containing triglyceride, wherein, in order to suppress side reactions and scatter the reaction heat so as to increase the hydrocarbon yield and to increase the life of equipment and a catalyst, recycling of an isomerized product may be performed, thereby achieving high efficiency in terms of capital and operation costs, compared to conventional methods.

### Technical Solution

In order to solve the above problems, according to an embodiment of the present invention, a method of manufacturing paraffin-based hydrocarbon in the diesel oil range having improved cold flow properties includes (a) hydrodeoxygenating a feed containing triglyceride, (b) separating the product of (a) into a gas and a liquid, (c) removing impurities and a light component from the liquid, and (d) isomerizing part of the product of (c) and then recycling the isomerized product so as to be mixed with the feed in (a), and recovering the remainder thereof as a final product, said method being characterized in that a gas-liquid mixture after isomerizing in (d) is mixed with the feed in (a) without additional use of a pressure-increasing equipment and/or a gas-liquid separator. According to another embodiment of the present invention, a method of preparing paraffin-based biodiesel includes (a) hydrodeoxygenating a feed containing triglyceride, (b) separating the product of (a) into a gas and a liquid, (c) removing impurities and a light component from the liquid, and (d) isomerizing 67 ∼ 80% of the product of (c) and then recycling the isomerized product so as to be mixed with the feed in (a), and recovering 20 ∼ 33% thereof as a final product, said method being characterized in that a gas-liquid mixture after isomerizing in (d) is mixed with the feed in (a) without additional use of a pressure-increasing equipment and/or a gas-liquid separator. In one embodiment of the present invention, the method may further include performing hydrofinishing after isomerizing, in order to saturate a double bond which may be generated after isomerization.

In one embodiment of the present invention, part or all of the gas obtained in (b) may be subjected to removal of impurities using any hydrogen purifier selected from the group consisting of a pressure swing adsorption (PSA), an absorber and a scrubber, and may be supplemented with hydrogen so that the molar concentration of hydrogen in the gas from which the impurities were removed is adjusted to 80% or more, and may then be recycled so as to be mixed with the feed in (a).

In the present invention, the gas-liquid mixture after isomerization in (d) is mixed with the feed in (a) without the additional use of a booster and/or a gas-liquid separator, thus reducing power and the capital cost.

In one embodiment of the present invention, (b) may be performed using a hot high pressure separator and a cold high pressure separator.

In one embodiment of the present invention, hydrodeoxygenation may be performed in multiple steps using one or more reactors at different temperatures. Specifically, hydrodeoxygenation may be conducted using two to six reactors at different temperatures. For example, different reactors may be used to perform saturation of double bonds upon low-temperature hydrodeoxygenation and to conduct triglyceride decomposition and deoxygenation upon high-temperature hydrodeoxygenation. Also, multiple reactors may be internally used in individual reaction steps.

In one embodiment of the present invention, heat generated from hydrodeoxygenation may be additionally recovered. For example, the reaction product in high temperature due to heat generation after high-temperature hydrodeoxygenation is first heat exchanged with the feed for high-temperature hydrodeoxygenation and is thus used to increase the temperature so as to initiate the reaction, and surplus heat energy is heat exchanged again with the portion of the system which should be heated, thus maximizing energy recovery. Furthermore, the reaction product in high temperature due to heat generation after the multi-step reaction may be heat exchanged with the feed or the feed for hydrodeoxygenation in the previous step, thus recovering energy.

In one embodiment of the present invention, the temperature of low-temperature hydrodeoxygenation for saturation of double bonds may fall in the range of 120 ∼ 260°C, and the temperature of high-temperature hydrodeoxygenation for triglyceride decomposition and deoxygenation may fall in the range of 270 ∼ 350°C. Furthermore, the temperature of low-temperature hydrodeoxygenation for saturation of double bonds may fall in the range of 150 ∼ 250°C, and the temperature of high-temperature hydrodeoxygenation for triglyceride decomposition and deoxygenation may fall in the range of 280 ∼ 330°C.

In one embodiment of the present invention, the pressure of hydrodeoxygenation may be 2.45 - 5.88 MPa (25 - 60 kgf/cm²), for example, 2.45 - 3.43 MPa (25 - 35 kgf/cm²). The liquid hourly space velocity (LHSV) of hydrodeoxygenation may be 0.5 ∼ 2 hr⁻¹ based on a fresh feed except for the recycled product.

In one embodiment of the present invention, the supply ratio of hydrogen relative to the reactant for hydrodeoxygenation may be 500 ∼ 1,200 Nm³/m³, and hydrogen may be supplied at 800 ∼ 1,000 Nm³/m³ relative to the reactant for hydrodeoxygenation. As the hydrodeoxygenation catalyst, any catalyst known in the art may be used..

In one embodiment of the present invention, the temperature of isomerization may fall in the range of 250 ∼ 350°C, and the pressure of isomerization may be 2.45 - 5.88 MPa (25 - 60 kgf/cm²), for example, 2.45 - 3.43 MPa (25 - 35 kgf/cm²). The LHSV of isomerization may be 0.5 ∼ 2 hr⁻¹ based on the fresh feed except for the recycled product, and the supply ratio of hydrogen relative to the reactant for isomerization may be 200 ∼ 800 Nm³/m³. As the isomerization catalyst, any catalyst known in the art may be used.

In one embodiment of the present invention, the temperature of hydrofinishing may fall in the range of 180 ∼ 250°C, and the pressure of hydrofinishing may be 2.45 - 5.88 MPa (25 - 60 kgf/cm²), for example, 2.45 - 3.43 MPa (25 - 35 kgf/cm²). The LHSV of hydrofinishing may be 0.5 ∼ 2 hr⁻¹ based on the fresh feed except for the recycled product.

### Advantageous Effects

According to an embodiment of the present invention, the main reaction is performed in multiple steps depending on the temperature, so that saturation of double bonds at low temperature and triglyceride decomposition and deoxygenation at high temperature can be carried out, thus suppressing side reactions due to double bonds and free fatty acids and scattering the reaction heat.

Also, part of the product of hydrodeoxygenation is isomerized, and then used to dilute a fresh feed, thereby decreasing probability of generating side reactions and absorbing the reaction heat to the isomerized product as a diluent, ultimately preparing paraffin-based hydrocarbon in the diesel oil range having improved cold flow properties while preventing excessive increase in temperature of the reactant.

### Description of Drawing

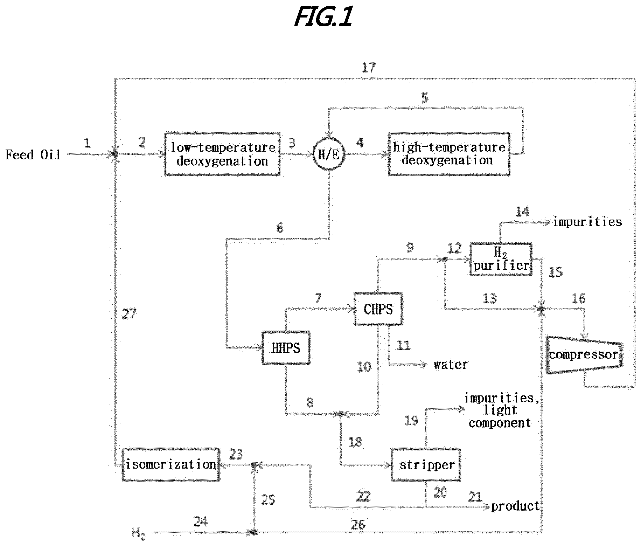

FIG. 1 illustrates a schematic flow of an embodiment of the present invention.

### Mode for Invention

Hereinafter, a detailed description will be given of the present invention.

The present invention enables manufacturing of paraffin-based hydrocarbon in the diesel oil range having superior cold flow properties from a feed composed mainly of triglyceride, other glycerides (diglyceride, monoglyceride) and fatty acids.

Compared to conventional methods, the method of the present invention may reduce the capital cost and is thus economical, by which the generation of side reactions may be suppressed, the generated heat may be scattered, and cold flow properties of a product may be improved.

Examples of the feed may include plant oil, such as soybean oil, rapeseed oil, com oil, rape oil, sunflower oil, castor oil, palm oil, linseed oil, poppy oil, walnut oil, peanut oil, cottonseed oil, rice bran oil, camellia oil, olive oil, etc., animal oil such as beef tallow, lard, sheep oil, fish oil, whale oil, etc., and waste edible oil.

With reference to FIG. 1 illustrating the method according to an embodiment of the present invention, feed oil containing triglyceride and a sulfur source for catalyst activation are fed together along the line 1 as a fresh feed, and the isomerized product is recycled along the line 27 and is mixed with the fresh feed so that the fresh feed is diluted. A hydrogen source for multi-step hydrodeoxygenation includes surplus hydrogen gas present in the product of isomerization (iso-dewaxing, IDW) along the line 27, and one obtained by subjecting the gas recovered via a hot high pressure separator (HHPS) and a cold high pressure separator (CHPS) after deoxygenation to compression using a compressor and recycling the compressed gas along the line 17.

Also, because the reaction heat of deoxygenation is very high, the heat is used to increase temperature of the feed before the reaction or the feed for low-temperature deoxygenation in the previous step via heat exchange, and thereby a considerable amount of energy may be recovered. The product in a gas-liquid mixture state subjected to heat exchange after deoxygenation is passed through the hot high pressure separator along the line 6, and through the cold high pressure separator along the line 7, and then separated into the gas along the line 9 and the liquid along the lines 10 and 11. The gas separated along the line 9 contains large amounts of carbon monoxide, carbon dioxide, propane, hydrogen sulfide, etc., in addition to surplus hydrogen, and also contains light components such as methane, ethane, etc. In order to maintain the hydrogen concentration in the gas to a predetermined level or more, part or all of the gas may be fed into the hydrogen purifier along the line 12, so that only high-purity hydrogen may be selectively reused via the line 15, and an insufficient amount of hydrogen after removal of impurities may be supplemented from the outside via the line 26.

Meanwhile, water generated as the reaction byproduct is separated from the oil and the gas along the line 11 via 3-phase separation using the cold high pressure separator, and is then discarded. The oil separated along the line 8 via the hot high pressure separator and the oil separated along the line 10 via the cold high pressure separator are collected together along the line 18 and are then passed through a stripper, whereby 67 ∼ 80% thereof may be recycled toward the fresh feed along the line 22 and the remainder thereof is recovered as a final product (Hydrotreated Bio-Diesel, HBD) along the line 21. This HBD is composed mainly of C15 ∼ C18 paraffin, and corresponds to diesel oil in terms of the boiling point As such, the stripper functions to remove water dissolved in liquid oil, impurities such as hydrogen sulfide, and light components having a lower boiling point than that of diesel oil, thus increasing purity of the product. A reboiler or steam may be used for stripping. Furthermore, the oil component recycled toward the feed is additionally heated using heat exchange or heating along the line 22, as necessary, and is then isomerized, and the mixture comprising surplus gas and oil which are combined together is recycled toward the feed along the line 27. As such, in some cases, hydrofinishing may be further performed after isomerization. According to one embodiment of the present invention, gas-liquid separation and pressure-increasing are not additionally carried out after isomerization and hydrofinishing, thus reducing the operation cost and simplifying the process, resulting in lowered capital cost.

According to one embodiment of the present invention, hydrodeoxygenation is performed in multiple steps depending on the temperature and the reaction sequence thereof is controlled so that saturation of double bonds is first performed at low temperature, and decomposition of triglyceride into fatty acids and deoxygenation are performed at high temperature, thereby effectively suppressing side reactions and scattering the reaction heat per reactor.

Also, impurities and light components are removed via the stripper from the liquid collected by means of the hot high pressure separator and the cold high pressure separator for separating surplus hydrogen and other gas components after deoxygenation, after which part of the resulting liquid, for example, about 67 ∼ 80% thereof may be recycled toward the feed so as to undergo isomerization, thereby improving cold flow properties of a product.

In the case where the recycling ratio exceeds 80%, the effect of decreasing the size of the isomerization reactor is insignificant and the entire equipment scale is increased, resulting in unfavorable capital cost On the other hand, in the case where the recycling ratio is less than 67%, the proportion of the isomerized product in the final product is lowered, thus obtaining insignificant improvement in cold flow properties as well as attaining poor dilution effects, making it impossible to achieve the purposes of the invention, including reduction of side reactions, scattering of reaction heat, corrosion-proof effect, etc. Because the isomerization catalyst is weak to a sulfur compound, in order to lower sulfur content in the feed, fresh hydrogen is fed along the line 24 and then may be supplied to the isomerization reactor according to a predetermined ratio of hydrogen to liquid feed via the lines 25 and 26.

Also, according to one embodiment of the present invention, only the hot high pressure separator and the cold high pressure separator are used, whereby the pressure in the system may be maintained high, thus obviating the need for sharp increasing of pressure using a compressor and a pump, and also reducing the capital cost without the use of a hot low pressure separator and a cold low pressure separator.

After isomerization along the recycling line 27, surplus hydrogen is not separated from the liquid product and is further mixed with the fresh feed and also combined with the gas separated after deoxygenation along the line 17, and the resulting mixture is used again in low-temperature deoxygenation and high-temperature deoxygenation. As such, surplus hydrogen after isomerization need not be subjected to additional pressure-increasing. This is because the pressure in the system is maintained high even after isomerization. Also, the isomerized product is utilized as the diluent for deoxygenation, as well as surplus hydrogen, thus obviating additional gas-liquid separation, thereby reducing the operation and capital costs and simplifying the process.

Because the ratio of hydrogen to oil required for hydrodeoxygenation is higher than that of isomerization, even when surplus hydrogen after isomerization is reused, additional hydrogen should be further supplied. Hence, the gas resulting from gas-liquid separation following hydrodeoxygenation is treated to remove impurities such as CO, CO₂, etc. therefrom and discharge them out of the system along the line 14 by means of a gas separator such as PSA or a device such as an absorber or a scrubber, after which it is supplemented with fresh hydrogen along the line 26 to adjust the hydrogen concentration and then recycled toward the fresh feed. When such a process configuration is applied, surplus hydrogen after deoxygenation and surplus hydrogen after isomerization may be sufficiently reused for deoxygeneation and the amount of impurities in the hydrogen gas used in deoxygenation may be adjusted as desired.

Meanwhile, when hydrogen is added to glyceride typically containing oxygen atoms in ester form, a fatty acid is separated from glyceride and then oxygen atoms present therein are removed in the form of water, CO and CO₂, whereby the fatty acid is converted into a hydrocarbon. This deoxygenation emits a very large amount of reaction heat, and thus an operation method or device able to scatter the reaction heat is required. The fatty acid attached to glyceride has one to three double bonds depending on the kind thereof, and such double bonds are saturated together during hydrogenation and also a large amount of heat is emitted.

However, when the reaction temperature is high, separation of glyceride, saturation of double bonds, and deoxygenation take place at almost the same time, and thus the separated unsaturated fatty acids may be combined into polymers due to double bonds before deoxygenation, or alcohol generated while the fatty acid is hydrogenated may cause esterification with the fatty acid to thus produce a polymer, and thereby the catalyst may become deactivated and the catalyst bed of the reactor may be plugged. Moreover, when the separated fatty acids are not completely converted into hydrocarbons via deoxygenation, the equipment may be corroded due to the unreacted fatty acids.

Therefore, according to one embodiment of the present invention, as the feed is diluted by recycling part of the converted hydrocarbon product or by using an additional inert material (an oxygen-free material such as hydrocarbon, etc.), the effects including scattering of reaction heat, mitigation of corrosion, reduction of side reactions, etc. may be expected, and furthermore, the above effects may be expected by performing deoxygenation in multiple steps. By using the method of the invention, polymerization due to the unsaturated free fatty acid and esterification due to the free fatty acid and alcohol may be reduced, and also, the reaction heat may be emitted stepwisely, thus preventing the temperature of the reactant from excessively increasing. Moreover, the use of several reactors, for example, two to six reactors may increase the retention time of the feed and may also raise the deoxygenation conversion, thereby decreasing the amount of unreacted free fatty acid and lowering the probability of corrosion of equipment.

According to one embodiment of the present invention, the temperature of low-temperature deoxygenation upon hydrodeoxygenation may fall in the range of, for example, 120 ∼ 260°C, 150 ∼ 250°C , or 180 ∼ 240°C. Also, the temperature of high-temperature deoxygenation may fall in the range of, for example, 270 ∼ 350°C, 280 ∼ 330°C, or 300 - 320°C. If the temperature of low-temperature deoxygenation exceeds the above upper limit, triglyceride decomposition may occur in addition to the saturation of double bonds, thus increasing the amount of free fatty acids. In contrast, if the temperature thereof is less than the above lower limit, the reaction rate may decrease, and thus low-temperature deoxygenation itself becomes meaningless. Also, if the temperature of high-temperature deoxygenation exceeds the above upper limit, the catalyst may deteriorate or cracking of fatty acid molecules may take place. In contrast, if the temperature thereof is less than the above lower limit, the reaction rate may decrease and the deoxygenation conversion may decrease.

Also, the pressure of both low-temperature and high-temperature reactions upon hydrodeoxygenation may fall in the range of 2.45 - 5.88 MPa (25 - 60 kgf/cm²). If the operation pressure exceeds the above upper limit, the wall thickness of the equipment may be excessively increased, thus lowering profitability. In contrast, if the pressure thereof is less than the above lower limit, partial pressure of hydrogen may decrease and thus hydrogen cannot sufficiently come into stoichiometric contact with the reactant, thus lowering the reaction conversion. According to the present invention, the pressure of hydrodeoxygenation is set to 2.45 - 5.88 MPa (25 - 60 kgf/cm²), which is lower compared to the conventional technologies, thereby decreasing the wall thickness of the reactor and lowering the capital cost, and thus the method of the invention is economical.

The LHSV (Liquid Hourly Space Velocity) of hydrodeoxygenation may be 0.5 ∼ 2 hr⁻¹ based on the fresh feed except for the recycled product. If the LHSV thereof is less than the above lower limit, profitability is low. In contrast, if the LHSV thereof exceeds the above upper limit, the reaction conversion is remarkably decreased.

The supply ratio of hydrogen relative to the reactant for hydrodeoxygenation is 500 ∼ 1,200 Nm³/m³, and preferably 800 ∼ 1,000 Nm³/m³. If this ratio exceeds the above upper limit, profitability is lowered due to excessive use of hydrogen. In contrast, if this ratio is less than the above lower limit, partial pressure of hydrogen in the reactor may decrease, thus lowering the reaction conversion.

Although the reaction heat of hydrodeoxygenation may be considerably scattered by the method of the invention, the temperature of the reaction product of high-temperature deoxygenation is increased to 20 ∼ 60°C. Thus, according to the present invention, the product of high-temperature deoxygenation is heat exchanged with the feed for high-temperature deoxygenation, and is additionally heat exchanged with the feed for low-temperature deoxygenation or with the portion of the system which should be heated, thereby maximally saving energy necessary for increasing the temperature.

Meanwhile, the product of hydrodeoxygenation is composed mainly of n-paraffin which has poor cold flow properties and a cloud point of about 20 °C, making it difficult to use such a product as fuel in the winter seasons. Thus, this product is subjected to additional isomerization, and thereby n-paraffin components are mostly converted into branched paraffin, the cloud point and the pour point of which may be remarkably lowered to -20°C or less. Also, in some cases, hydrofinising may be further performed after isomerization in order to remove the remaining double bonds.

The temperature of isomerization may fall in the range of 250 ∼ 350°C, and preferably 280 ∼ 320 °C. If this reaction temperature is less than the above lower limit, the reaction rate may decrease and the reaction conversion may also decrease, thus deteriorating the isomerization effect In contrast, if the reaction temperature exceeds the above upper limit, the catalyst may deteriorate or excessive cracking of hydrocarbon molecules may occur, undesirably lowering the product yield

The temperature of hydrofinishing which may be further performed after isomerization in some cases may fall in the range of 180 ∼ 250°C, and preferably 200 ∼ 230 °C. If this reaction temperature is less than the above lower limit, the reaction rate may decrease and the reaction conversion may also decrease, thus deteriorating the effect of treating isomerization byproducts. If the reaction temperature exceeds the above upper limit, an improvement in reaction performance is low, thus negating economic benefits.

The pressure of both isomerization and hydrofinishing may fall in the range of 2.45 - 5.88 MPa (25 - 60 kgf/cm²). If the pressure thereof exceeds the above upper limit, the wall thickness of the equipment may be increased, thus lowering profitability. In contrast, if the pressure thereof is less than the above lower limit, partial pressure of hydrogen may decrease, and thus hydrogen cannot sufficiently come into stoichiometric contact with the reactant, thus lowering the reaction conversion.

The LHSV of isomerization and hydrofinishing may be 0.5 ∼ 2 hr⁻¹ based on the fresh feed except for the recycled product. If the LHSV thereof exceeds the above upper limit, the reaction conversion may be considerably lowered. In contrast, if the LHSV thereof is less than the above lower limit, the flow rate of the feed becomes too low, thus decreasing profitability.

The ratio of hydrogen to the reactant for isomerization may be 200 ∼ 800 Nm³/m³, and preferably 400 ∼ 600 Nm³/m³. If this ratio exceeds the above upper limit, profitability may be lowered due to excessive use of hydrogen. In contrast, if this ratio is less than the above lower limit, partial pressure of hydrogen in the reactor may decrease, thus lowering the reaction conversion.

According to the present invention, 67 ∼ 80% of the product of hydrodeoxygenation is isomerized and then recycled toward the fresh feed, and 20 ∼ 33% thereof is recovered as a final product. In this case, the mixing ratio of the recycled product relative to the fresh feed is about 2 ∼ 4 times. If the mixing ratio exceeds the above upper limit, the entire equipment scale may increase, thus decreasing profitability in terms of the capital cost. In contrast, if the mixing ratio is less than the above lower limit, dilution effects may decrease, making it impossible to achieve desired purposes, including reduction of side reactions, scattering of reaction heat, corrosion-proof effect, etc.

The system of the present invention is configured such that isomerization is not performed for the total of the product of deoxygenation but is conducted for only the recycled product which flows toward the fresh feed which is to be diluted, and the remainder thereof which is not recycled is directly recovered as a final product, thus effectively reducing the size of the isomerization reactor.

Also, the gas-liquid separator and the pressure-increasing equipments are not additionally provided after isomerization, and the gas-liquid mixture is combined with the fresh feed and is thus added again to the deoxygenation step, thereby increasing the reuse ratio of hydrogen, saving power and simplifying the process. In order to solve the problems of the isomerization catalyst being weak to a sulfur compound or other impurities, fresh hydrogen gas is directly fed into the isomerization reactor, and the product of hydrodeoxygenation fed into the isomerization reactor is first passed through the stripper. Upon hydrodeoxygenation using the catalyst which is comparatively strong to impurities, excess hydrogen gas separated via gas-liquid separation after hydrodeoxygenation is recycled, provided that the impurities such as CO/CO₂ of the recycled gas are separated so as to appropriately maintain the sulfur concentration and the hydrogen concentration in the gas, and are then discharged to the outside, and the insufficient amount thereof is supplemented with fresh hydrogen gas.

The principle of the present invention may be additionally explained through the following examples, which are not construed to limit the scope of the present invention which is considered by the present inventors.

### Example

### Example 1: Basic One-Step Deoxygenation (Once-Through Mode)

A crude palm oil (CPO) feed was fed at an LHSV of 1 hr⁻¹ into a pilot reactor filled with 50 cc of a NiMo-based deoxygenation catalyst. Also, dimethyl disulfide was fed in an amount of 0.3 wt% based on the CPO, and H₂ was fed so that the H₂/oil ratio at the inlet of the reactor was 900 Nm³/m³, and hydrodeoxygenation was performed at an inlet temperature of 320°C and a pressure of 2.94 MPa (30 kgf/cm²) under adiabatic conditions. As a result, the outlet temperature of the reactor was increased to 492°C due to the reaction heat.

Thus, in the case where hydrodeoxygenation was conducted only in one step without recycling of the product thereof, the reaction temperature was increased by 172°C, which is regarded as very large.

### Example 2: Two-Step Deoxygenation (Once-Through Mode)

CPO was subjected to hydrodeoxygenation in the same manner as in Example 1, with the exception that the reaction was sequentially carried out in two steps, including the first step at an inlet temperature of 230°C and the second step at an inlet temperature of 330°C. As a result, the outlet temperature of the reactor in the first step was increased to 329°C, and the outlet temperature of the reactor in the second step was increased to 428°C, due to the reaction heat.

Thus, in the case where hydrodeoxygenation was conducted in two steps without recycling of the product thereof, the reaction temperatures were increased by 99°C in the first step and by 98°C in the second step, which indicates the reaction heat was scattered but the increase in the temperature per reactor was very high.

### Example 3: Two-Step Deoxygenation (Recycle Mode)

CPO was subjected to hydrodeoxygenation in the same manner as in Example 2, with the exception that CPO was 4-fold diluted (based on the volume) with the product of hydrodeoxygenation and was then fed into the reactor. As such, the inlet temperature for low-temperature deoxygenation was set to 230 °C, and the inlet temperature for high-temperature deoxygenation was set to 306°C. As is apparent from the reaction results, the outlet temperature of the low-temperature deoxygenation reactor was increased to 257°C, and the outlet temperature of the high-temperature deoxygenation reactor was increased to 336°C, due to the reaction heat.

Thus, in the case where deoxygenation was conducted in two steps in a state of the product thereof being recycled and mixed in an amount four times that of the CPO, the reaction temperatures were increased by 27°C upon low-temperature deoxygenation of the first step and by 30°C upon high-temperature deoxygenation of the second step, which indicates the reaction heat was scattered and the increase in the reaction temperature per reactor was reduced to 30°C or less.

### Example 4: Isomerization/Hydrofinishing (Once-Through Mode)

The product of deoxygenation obtained in Example 3 was fed at an LHSV of 1 hr⁻¹ into a pilot reactor filled with 50 cc of a Pt-based isomerization catalyst. Further, H₂ was fed so that the H₂/oil ratio at the inlet of the reactor was 500 Nm³/m³, and isomerization and hydrofinishing were conducted at an inlet temperature of 310°C and a pressure of 2.94 MPa (30 kgf/cm²) under adiabatic conditions. The cloud point of the reaction product was measured to be -23°C, and the pour point thereof was measured to be -31 °C.

Thus, in the case where C15 ∼ C18 n-paraffin as the product of deoxygenation was isomerized without recycling of the product, it was mostly converted into branched paraffin. Thereby, the resulting product can be sufficiently used without problems of cold flow properties even in winter seasons.

### Example 5: Isomerization/Hydrofinishing (Recycle Mode)

Isomerization and hydrofinishing were conducted in the same manner as in Example 4, with the exception that the branched paraffin product was recycled in an amount four times the volume of n-paraffin as the fresh feed so as to be reacted. Thus, the reaction product had a cloud point of -20°C and a pour point of -23°C.

In the case where branched paraffin produced from C15 ∼ C18 n-paraffin as the product of deoxygenation was recycled in an amount four times the volume of n-paraffin as the fresh feed and isomerized, reaction efficiency was slightly decreased due to dilution effects but was not at the level which causes problems of cold flow properties in winter seasons.

## Claims

1. A method of preparing paraffin-based hydrocarbon in the diesel oil range, comprising:
(a) hydrodeoxygenating a feed containing triglyceride;
(b) separating a product of (a) into a gas and a liquid;
(c) removing impurities and a light component from the liquid; and
(d) isomerizing part of a product of (c) and then recycling the isomerized product so as to be mixed with the feed in (a), and recovering a remainder thereof as a final product,
said method being **characterized in that** a gas-liquid mixture after isomerizing in (d) is mixed with the feed in (a) without additional use of a pressure-increasing equipment and/or a gas-liquid separator.

2. The method of claim 1, wherein (d) is performed by isomerizing 67 ∼ 80% of the product of (c) and then recycling the isomerized product so as to be mixed with the feed in (a), and recovering 20 ∼ 33% thereof as the final product.

3. The method of claim 1, further comprising performing hydrofinishing so as to saturate a double bond which may remain, after isomerizing.

4. The method of claim 1, wherein part or all of the gas obtained in (b) undergoes removal of impurities using any hydrogen purifier selected from the group consisting of a pressure swing adsorption (PSA), an absorber and a scrubber, and is supplemented with hydrogen so that a molar concentration of hydrogen in the gas from which the impurities were removed is adjusted to 80% or more, and is then recycled so as to be mixed with the feed in (a).

5. The method of claim 1, wherein (b) is performed using a hot high pressure separator and a cold high pressure separator.

6. The method of claim 1, wherein the hydrodeoxygenating is performed in multiple steps using one or more reactors at different temperatures.

7. The method of claim 1, further comprising the heat exchanger additionally to recover heat generated from the hydrodeoxygenating.

8. The method of claim 1, wherein the hydrodeoxygenating comprises the step of saturation of a double bond and the step of triglyceride decomposition and deoxygenation and the hydrodeoxygenating is performed in such a manner that saturation of a double bond is carried out at 120 ∼ 260°C and triglyceride decomposition and deoxygenation are carried out at 270 ∼ 350°C.

9. The method of claim 8, wherein the saturation of the double bond is carried out at 150 ∼ 250°C, and the triglyceride decomposition and deoxygenation are carried out at 280 ∼ 330°C.

10. The method of claim 1, wherein the hydrodeoxygenating is performed at a pressure of 2.45 ∼ 5.88 MPa (25 ∼ 60 kgf/cm²).

11. The method of claim 1, wherein the hydrodeoxygenating is performed at a liquid hourly space velocity (LHSV) of 0.5 ∼ 2 hr⁻¹ based on a fresh feed except for the recycled product.

12. The method of claim 1, wherein the hydrodeoxygenating is performed by supplying hydrogen at 500 ∼ 1,200 Nm³/m³ relative to a reactant therefor.

13. The method of claim 1, wherein the isomerization is performed at 250 ∼ 350°C, at a pressure of 2.45 ∼ 5.88 MPa (25 ∼ 60 kgf/cm²), at an LHSV of 0.5 ∼ 2 hr⁻¹ based on a fresh feed except for the recycled product, and by supplying hydrogen at 200 ∼ 800 Nm³/m³ relative to a reactant therefor.

14. The method of claim 3, wherein the hydrofinishing is performed at 180 ∼ 250°C, at a pressure of 2.45 ∼ 5.88 MPa (25 ∼ 60 kgf/cm²), and at an LHSV of 0.5 ∼ 2 hr⁻¹ based on a fresh feed except for the recycled product.

## Patentansprüche

1. Ein Verfahren zum Herstellen eines Kohlenwasserstoffs auf Paraffinbasis in dem Dieselkraftstoffbereich, mit folgenden Schritten:
(a) Hydrodesoxidieren einer Triglycerid-haltigen Einspeisung;
(b) Trennen eines Produkts aus (a) in ein Gas und eine Flüssigkeit;
(c) Entfernen von Verunreinigungen und einer leichten Komponente aus der Flüssigkeit; und
(d) Isomerisieren eines Teils eines Produkts aus (c) und dann Rückführen des isomerisierten Produkts, um mit der Einspeisung bei (a) gemischt zu werden, und Wiedergewinnen eines Rests desselben als Endprodukt,
wobei das Verfahren **dadurch gekennzeichnet ist, dass** eine Gas-Flüssigkeit-Mischung nach dem Isomerisieren bei (d) mit der Einspeisung bei (a) ohne eine zusätzliche Verwendung einer druckerhöhenden Ausrüstung und/oder eines Gas-Flüssigkeit-Separators gemischt wird.

2. Das Verfahren gemäß Anspruch 1, bei dem (d) durch Isomerisieren von 67 ∼ 80% des Produkts aus (c) und darauffolgendes Rückführen des isomerisierten Produkts, um mit der Einspeisung bei (a) gemischt zu werden, und Wiedergewinnen von 20 ∼ 33% desselben als Endprodukt durchgeführt wird.

3. Das Verfahren gemäß Anspruch 1, das ferner ein Durchführen einer Hydro-Nachbearbeitung, um eine Doppelbindung zu sättigen, die verbleiben könnte, nach dem Isomerisieren aufweist.

4. Das Verfahren gemäß Anspruch 1, bei dem ein Teil von dem oder das gesamte Gas, das bei (b) erhalten wird, einer Entfernung von Verunreinigungen unter Verwendung eines beliebigen Wasserstoffreinigers unterzogen wird, der aus der Gruppe ausgewählt wird, die besteht aus einer Druckwechseladsorption (PSA), einem Absorbierer und einem Wäscher, und durch Wasserstoff ergänzt wird, so dass eine molare Konzentration von Wasserstoff in dem Gas, aus dem die Verunreinigungen entfernt wurden, auf 80% oder mehr angepasst wird, und dann rückgeführt wird, um mit der Einspeisung bei (a) gemischt zu werden.

5. Das Verfahren gemäß Anspruch 1, bei dem (b) unter Verwendung eines Heiß-Hochdruck-Separators und eines Kalt-Hochdruck-Separators durchgeführt wird.

6. Das Verfahren gemäß Anspruch 1, bei dem das Hydrodesoxidieren in mehreren Schritten unter Verwendung eines oder mehrerer Reaktoren bei unterschiedlichen Temperaturen durchgeführt wird.

7. Das Verfahren gemäß Anspruch 1, das ferner aufweist, dass der Wärmetauscher zusätzlich Wärme wiedergewinnt, die durch das Hydrodesoxidieren erzeugt wird.

8. Das Verfahren gemäß Anspruch 1, bei dem das Hydrodesoxidieren den Schritt der Sättigung einer Doppelbindung und den Schritt einer Triglycerid-Zersetzung und Desoxidation aufweist und das Hydrodesoxidieren auf eine derartige Weise durchgeführt wird, dass die Sättigung einer Doppelbindung bei 120 ∼ 260°C ausgeführt wird und die Triglycerid-Zersetzung und Desoxidation bei 270 ∼ 350°C ausgeführt werden.

9. Das Verfahren gemäß Anspruch 8, bei dem die Sättigung der Doppelbindung bei 150 ∼ 250°C ausgeführt wird und die Triglycerid-Zersetzung und Desoxidation bei etwa 280 ∼ 330°C ausgeführt werden.

10. Das Verfahren gemäß Anspruch 1, bei dem das Hydrodesoxidieren bei einem Druck von 2,45 ∼ 5,88 MPa (25 ∼ 60 kg/cm²) durchgeführt wird.

11. Das Verfahren gemäß Anspruch 1, bei dem das Hydrodesoxidieren bei einer stündlichen Flüssig-Raumgeschwindigkeit (LHSV) von 0,5 ∼ 2 hr⁻¹ basierend auf einer frischen Einspeisung außer dem rückgeführten Produkt durchgeführt wird.

12. Das Verfahren gemäß Anspruch 1, bei dem das Hydrodesoxidieren durch Zuführen von Wasserstoff mit 500 ∼ 1.200 Nm³/m³ relativ zu einem Reaktanten für dasselbe durchgeführt wird.

13. Das Verfahren gemäß Anspruch 1, bei dem die Isomerisation bei 250 ∼ 350°C, bei einem Druck von 2,45 ∼ 5,88 MPa (25 ∼ 60 kgf/cm²), mit einer LHSV von 0,5 ∼ 2 hr⁻¹ basierend auf einer frischen Zuführung außer dem rückgeführten Produkt und durch Zuführen von Wasserstoff mit 200 ∼ 800 Nm³/m³ relativ zu einem Reaktanten für dasselbe durchgeführt wird.

14. Das Verfahren gemäß Anspruch 3, bei dem das Hydro-Nachbearbeiten bei 180 ∼ 250°C, bei einem Druck von 2,45 ∼ 5,88 MPa (25 ∼ 60 kgf/cm²) und mit einer LHSV von 0,5 ∼ 2 hr⁻¹ basierend auf einer frischen Einspeisung außer dem rückgeführten Produkt durchgeführt wird.

## Revendications

1. Procédé de préparation d'un hydrocarbure à base de paraffine de la gamme des carburants diesels, comprenant :
(a) l'hydrodésoxygénation d'une charge d'alimentation contenant un triglycéride ;
(b) la séparation d'un produit de (a) en un gaz et un liquide ;
(c) l'élimination d'impuretés et d'un composant léger à partir du liquide ; et
(d) l'isomérisation d'une partie d'un produit de (c) et ensuite le recyclage du produit isomérisé afin qu'il soit mélangé avec la charge d'alimentation dans (a), et la récupération d'un reste de celui-ci en tant que produit final,
ledit procédé étant **caractérisé en ce qu'**un mélange gaz-liquide après isomérisation dans (d) est mélangé avec la charge d'alimentation dans (a) sans utilisation additionnelle d'un équipement d'augmentation de pression et/ou d'un séparateur de gaz-liquide.

2. Procédé selon la revendication 1, dans lequel (d) est réalisé par l'isomérisation de 67 à 80 % du produit de (c) et ensuite le recyclage du produit isomérisé afin qu'il soit mélangé avec la charge alimentation dans (a), et la récupération de 20 à 33 % de celui-ci en tant que produit final.

3. Procédé selon la revendication 1, comprenant en outre la mise en oeuvre d'un hydrofinissage afin de saturer une liaison double qui peut rester, après l'isomérisation.

4. Procédé selon la revendication 1, dans lequel une partie ou la totalité du gaz obtenu dans (b) subit une élimination d'impuretés en utilisant n'importe quel purificateur d'hydrogène sélectionné dans le groupe constitué d'une adsorption à pression modulée (PSA), d'un absorbeur et d'un épurateur, et est complétée avec de l'hydrogène de façon qu'une concentration molaire d'hydrogène dans le gaz duquel les impuretés ont été éliminées soit ajustée à 80 % ou plus, et est ensuite recyclée afin d'être mélangée avec la charge alimentation dans (a).

5. Procédé selon la revendication 1, dans lequel (b) est réalisé en utilisant un séparateur chaud à haute pression et un séparateur froid à haute pression.

6. Procédé selon la revendication 1, dans lequel l'hydrodésoxygénation est réalisée en plusieurs étapes en utilisant un ou plusieurs réacteurs à différentes températures.

7. Procédé selon la revendication 1, comprenant en outre l'échangeur de chaleur en plus pour récupérer la chaleur générée par l'hydrodésoxygénation.

8. Procédé selon la revendication 1, dans lequel l'hydro-désoxygénation comprend l'étape de saturation d'une liaison double et l'étape de décomposition et de désoxygénation d'un triglycéride et l'hydrodésoxygénation est réalisée de telle manière que la saturation d'une liaison double est réalisée à une température de 120 à 260 °C et la décomposition et la désoxygénation du triglycéride sont réalisées à une température de 270 à 350 °C.

9. Procédé selon la revendication 8, dans lequel la saturation de la liaison double est réalisée à une température de 150 à 250 °C, et la décomposition et la désoxygénation du triglycéride sont réalisées à une température de 280 à 330 °C.

10. Procédé selon la revendication 1, dans lequel l'hydro-désoxygénation est réalisée à une pression de 2,45 à 5,88 MPa (25 à 60 kgf/cm²).

11. Procédé selon la revendication 1, dans lequel l'hydro-désoxygénation est réalisée à une vitesse spatiale horaire de liquide (LHSV) de 0,5 à 2 h⁻¹ sur la base d'une charge d'alimentation fraîche sauf pour le produit recyclé.

12. Procédé selon la revendication 1, dans lequel l'hydro-désoxygénation est réalisée en fournissant de l'hydrogène à raison de 500 à 1 200 Nm³/m³ par rapport à un réactif pour cela.

13. Procédé selon la revendication 1, dans lequel l'isomérisation est réalisée à une température de 250 à 350 °C, à une pression de 2,45 à 5,88 MPa (25 à 60 kgf/cm²), à une LHSV de 0,5 à 2 h⁻¹ sur la base d'une charge d'alimentation fraîche sauf pour le produit recyclé, et en fournissant de l'hydrogène à raison de 200 à 800 Nm³/m³ par rapport à un réactif pour cela.

14. Procédé selon la revendication 3, dans lequel l'hydrofinissage est réalisé à une température de 180 à 250 °C, à une pression de 2,45 à 5,88 MPa (25 à 60 kgf/cm²), et à une LHSV de 0,5 à 2 h⁻¹ sur la base d'une charge d'alimentation fraîche sauf pour le produit recyclé.
